(19) Europäisches Patentamt
European Patent Office
Office européen des brevets

(11) Publication number: **0 332 450 B1**

(12) # EUROPEAN PATENT SPECIFICATION

(45) Date of publication of patent specification: **23.02.94**

(51) Int. Cl.5: **F16H 55/08**, F16H 1/32, F16K 35/04, F16H 35/04

(21) Application number: **89302360.6**

(22) Date of filing: **09.03.89**

(54) **Double-toothed gear, system for generating its tooth profiles and differential speed reduction apparatus using it.**

(30) Priority: **10.03.88 JP 56984/88**

(43) Date of publication of application:
**13.09.89 Bulletin 89/37**

(45) Publication of the grant of the patent:
**23.02.94 Bulletin 94/08**

(84) Designated Contracting States:
**DE FR GB IT NL**

(56) References cited:
**EP-A- 0 078 111**
**DE-A- 2 559 488**
**JP-A-54 120 347**

(73) Proprietor: **Kabushiki Kaisha Makishinko**
**3-4-206, Tanimachi 7-chome**
**Chuo-ku, Osaka(JP)**

(72) Inventor: **Yokoi, Takao**
**5-9-92 Kikyogaoka**
**Nabarishi Mieken(JP)**

(74) Representative: **Purvis, William Michael Cameron et al**
**D. Young & Co.,**
**21 New Fetter Lane**
**London EC4A 1DA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a differential speed reduction apparatus and a system for generating tooth profiles adapted for use in the differential speed reduction apparatus. More particularly, the present invention relates to a differential speed reduction apparatus employing a double-toothed gear having a uniquely generated tooth profile, and a system for generating the tooth profiles.

It is known in the art to employ a double-toothed gear in the differential speed reduction apparatus, wherein the gear wobbles in association with the rotation of an input shaft. For example, Japanese Patent Publication (unexamined) No. 54-120347 discloses a typical example of the differential speed reduction apparatus of such kind.

This prior art apparatus comprises a double-toothed gear capable of wobbling in association with the rotation of the input shaft, a stationary gear, and a movable gear connected to the output shaft. These gears are engaged with each other in a unique manner, but the unique engagement requires specially generated tooth profiles. As a matter of fact, it is not easy to generate such unique gear profiles as to be required by the prior art. This is the reason why the prior art apparatus has not been put into practice.

JP-A-54120347 discloses a wobbling, double-toothed gear of this general kind. However, the device of JP-A-54120347 includes merely straight cut gear teeth which have portions which mate in a face-to-face, sliding manner. Thus, the device of JP-A-54120347 suffers from undue wear and cannot transmit a large torque. It is also inefficient, because of the sliding contact of components.

The present invention is directed toward solving the difficulties involved in the conventional systems for generating tooth profiles used in differential speed reduction apparatus discussed above. Thus an object of the present invention is to provide a differential speed reduction apparatus including a double-toothed gear having a profile adapted for use in the differential speed reduction apparatus.

Another object of the present invention is to provide a system for generating tooth profiles adapted for use in differential speed reduction apparatus.

According to one aspect of the present invention, there is provided a differential speed reduction apparatus, which comprises a double-toothed gear including face cams at opposite sides, each face cam having a tooth profile generated so as to be suitable for use in the differential speed reduction apparatus, an input shaft carrying the double-toothed gear, a slant shaft rotatably connected to the input shaft such that the slant shaft wobbles in association with the rotation of the input shaft, a stationary face gear engageable with the face cams of the double-toothed gear, and a moveable face gear secured to an output shaft, wherein (i) the stationary face gear and the moveable face gear have a roller-like or a convex-face contour; (ii) the double-toothed gear is rotatably carried on the slant shaft; and (iii) the moveable face gear is engageable with the face cam of the double-toothed gear, characterised in that the face cams of the double-toothed gear each have a tooth profile which is defined by a locus curve plotted by the roller-like contour or convex-face contour as its centre is moved along points ($X_n$, $Y_n$) in a system of coordinates, $X_n$ and $Y_n$ being given by the following formulae:

$$X_n = \Delta S - DX = (D.\ 2\pi/n\ .K/N) - H.\sin C$$
$$= D\ .2\pi/n\ .\ K/N - H\ \sin[\tan^{-1}(\sin 2\pi/n\ .\ \tan\alpha)]$$

$$Y_n = H - K\ .\sin[\tan^{-1}(\cos 2\pi/n\ .\ \tan\alpha)$$

where:

n is an integer;

ΔS is the circumferential displacement of the relevant cam induced by an angular displacement ΔA°;

DX is the linear displacement of the relevant roller-like contour from the axis of the face cam;

C° represents an angular displacement of the axis of the face cam;

α is the angle at which the slant shaft is inclined to axis A-A' of the input shaft;

N is the number of teeth of the relevant cam;

D is the difference between the number of roller-like or convex-face contours and the number of teeth of one of the face cams;

H is the distance between the centre of the roller-like contour of the respective face gear and a radial straight line C-C' passing through the centre of the double-toothed gear; and

K is the radial distance between the centre of the double-toothed gear and the peripheral plane in which the profile is formed.

According to another aspect of the present invention, there is provided a system for generating a tooth profile adapted for use in a differential speed reduction apparatus as defined above, the system comprising a B-axis NC rotary table reversibly rotatable about an axis B by an angle $\alpha$, a C-axis NC rotary table provided on the B-axis rotary table, the C-axis table being reversibly rotatable about an axis C by an angle $\alpha$, the axis C intersecting with the axis B at a right angle, an A-axis NC rotary table provided on the C-axis rotary table, the A-axis rotary table being reversibly rotatable about an axis A intersecting with the axis C at a right angle, the A-axis rotary table including a rotary shaft, a gear blank holder secured to the rotary shaft, an end mill secured to the gear blank holder to cut the sides of a gear blank held by the gear blank holder, the end mill having a diameter equal to that of the rollers of the differential speed reduction apparatus or equal to twice the radius of curvature of the convex-face contour (if present) thereof, the A-axis rotary table being driven to enable the gear blank to rotate by $\Delta A°$ at which a slant shaft wobbles, and the B-axis rotary shaft and the C-axis rotary shaft respectively being driven to enable the blank to reversibly rotate by angles $B°$ and $C°$, thereby generating a desired tooth profile, wherein

$B° = \tan^{-1} (\text{Cos. } \theta . \tan \alpha)$;
$C° = \tan^{-1} (\text{Sin. } \theta . \tan \alpha)$;

$\theta$ is the angular rotation of the slant shaft of the speed reduction apparatus about the axis of the input shaft (1) thereof; and

$\alpha$ is the angle of inclination of the slant shaft relative to the input shaft.

Other objects and advantages of the present invention will become more apparent from the following detailed description, when taken in conjunction with the accompanying drawings which show, for the purpose of illustration only, one embodiment in accordance with the invention.

The double-toothed gear having uniquely generated profiles at opposite sides is best shown in Fig. 12, which takes the form of a cam having a roller-like or convex contour. In this specification these portions are called face cams so as to distinguish them from ordinary types of face gears.

In the drawings:

Fig. 1 is a diagrammatic view exemplifying the underlying principle of the differential speed reduction apparatus using a double-toothed gear including tooth profiles generated according to the present invention;

Figs. 2 to 5 are diagrammatic views exemplifying a process for generating the tooth profiles;

Fig. 6 is a view showing the development of the tooth profile;

Figs. 7 to 11 are views showing a series of steps at which the tooth profile is progressively generated, wherein (a) is a plan view and (b) is a front view;

Fig. 12 is a vertical cross-section through a double-toothed gear according to the invention, showing face cams having the tooth profiles generated according to the present invention;

Fig. 13 is a view showing a development of the face cam of Fig. 12; and

Fig. 14 is a cross-sectional view showing a main part of a differential speed reduction apparatus using the double-toothed gear.

Referring to Figs. 1 to 7, the manner of generating the tooth profiles of face cams 11, 12 will be described:

Fig. 1 diagrammatically shows the underlying principle of a differential speed reduction apparatus employing the face cams 11, 12 whose profiles are generated according to the present invention. A double-toothed gear 10 having the face cams 11, 12 on opposite sides is rotatively carried on a slant shaft 2 connected to an input shaft 1 through a bearing 3. The input shaft 1 is carried on bearings 4, 5 such that it rotates about a axis A-A'.

There are provided a stationary face gear 13 and a movable face gear 14 each facing the double-toothed gear 10, on opposite sides thereof in the arrangement of Figure 1. The stationary face gear 13 and the movable face gear 14 include rollers 15 and 16 engageable with the face cams 11 and 12, respectively, which rollers 15 are radially arranged about the axis A-A'. Instead of the rollers 15 and 16 convex-face contour teeth can be used The stationary gear 13 is fixed to a casing 6, and the movable gear 14 is connected to an output shaft 7 such that it rotates relative to the casing 6. The output shaft 7 is concentric with the input shaft 1, and carried on a bearing 8.

The speed reduction apparatus is operated as follows:

When the input shaft 1 is rotated, the double-toothed gear 10 revolves with respect to the stationary face gear 13 and the movable face gear 14 in accordance with the wobbling motion of the slant shaft 2. Simultaneously it rotates about its own center by an amount depending upon the gear ratio between the rollers 15 and the face cam 11. However, since the face cam 11 is restrained in motion by the stationary face gear 13, the movable face gear 14 rotates by an amount depending upon the gear ratio between the rollers 16 and the face cam 12, plus or minus the axial rotations of the double-toothed gear 10. In this way the speed of rotation of the output shaft 7 is reduced, Herein the "plus" means a case where the rotating direction of the movable face gear 14 and that of the axial rotation of the double-toothed gear 10 are the same, and the "minus" means a case where they are in opposition. The speed reduction ratios are changeable depending upon the numbers of teeth of the face cams 11, 12, the number of the rollers 15 of the stationary face gear 13, and the number of the rollers 16 of the movable face gear 14. Now, suppose that:

The number of the rollers 15 is $N_1$

The number of teeth of the face cam 11 $N_2$

The number of teeth of the face cam 12 is $N_3$

The number of the rollers 16 is $N_4$

Therefore, the speed reduction ratio (i) is calculated as follows:

The rotation of the double-toothed gear 10 effected by the revolution of the face cam 11 relative to the rollers 15 is expressed by:

$$i_1 = 1 - N_1/N_2$$

The speed reduction ratio ($i_2$) between the face cam 12 and the rollers 16 is expressed by:

$$i_2 = N_3/N_4$$

The rotation of the rollers 16 effected by the revolution of the face cam 12 relative to the rollers 15 is expressed by:

$$i_3 = 1 - N_3/N_4$$

The total speed reduction ratio (i) is obtained from the following equation:

$$i = i_1 \cdot i_2 + i_3$$

$$= (1 - N_1/N_2) \cdot (N_3/N_4) + (1 - N_3/N_4)$$

$$= 1 - N_1 \cdot N_3 / N_2 \cdot N_4$$

where:

$N_1$ = 19

$N_2$ = 18

$N_3$ = 19

$N_4$ = 20

Therefore,

$$i = 1 - 19 \cdot 19/18 \cdot 20$$

$$= -1/360$$

when
$N_1$ = 18
$N_2$ = 19
$N_3$ = 19
$N_4$ = 20
Therefore,

$$i = 1 - 18 \cdot 19/19 \cdot 20$$
$$= 1/10$$

As is evident from the comparison between the two results, a slight change in gear ratios leads to a wide variation of speed reduction ratios. The (+) means that the input shaft 1 and the output shaft 7 rotate in the same direction, and the (-) means that they rotate in the opposite directions.

The manner of generating the tooth profiles of the face cams 11, 12 will be described:

In accordance with the regular rotation of the input shaft 1 the face cams 11, 12 are also rotated by equal angles under certain conditions. Since the face cams 11, 12 are arranged in a plane perpendicular to the slant shaft 2, the angular displacement of the slant shaft 2 becomes an important factor to consider for generating the tooth profile of the cam faces 11 and 12. Now, the slant shaft 2 and the input shaft 1 will be considered by reference to Fig. 2.

The slant shaft 2 is inclined at an angle of $\alpha°$ relative to the axis A-A' of the input shaft 1, and rotates about it by equal angles. Suppose that there is a point (P) spaced by a distance $\ell$ from the center O of the slant shaft 2 where it intersects with the axis A-A' and that the point (P) rotates by an angle of $\theta°$ in a clockwise direction to shift to point (P'). The angles between the slant shaft 2 and the axis A-A' are B° and C° and are obtained in the following manner:

A horizontal component L of the distance $\ell$ on the axis A-A' is expressed by:

$$L = \ell \cdot \cos\alpha \qquad (1)$$

Suppose that a vertical component is Y and a horizontal component is X, each is expressed by:

$R = L \cdot \tan\alpha$ (2)

$X = R \cdot \sin\theta$ (3)

$Y = R \cdot \cos\theta$ (4)

Therefore,

$\tan B = Y/L$
$\tan C = X/L$

Substituting these for X and Y in (3) and (4) above,

$B = \tan^{-1}(R \cdot \cos\theta/L)$ (5)

$C = \tan^{-1}(R \cdot \sin\theta/L)$ (6)

Substituting $L = R/\tan\alpha$ of (2) for L,

$B = \tan^{-1}(R \cdot \cos\theta \cdot \tan\alpha/R)$
$\therefore B = \tan^{-1}(\cos\theta \cdot \tan\alpha)$ (7)

$C = \tan^{-1}(R \cdot \sin\theta \cdot \tan\alpha/R)$
$\therefore C = \tan^{-1}(\sin\theta \cdot \tan\alpha)$ (8)

In this way the equations (7) an (8) are obtained. Herein, $\alpha$ is a constant. Therefore, the angles B° and C° vary depending upon values derived from the equations (7) and (8) substituted by angular displacements $\theta$.

Next, the angular displacement of the face cam 11 will be obtained:

The face cam 11 displaces angularly in association with the input shaft 1. It rotates about its own center by differences between the number of the rollers 15 (number of teeth) $N_1$ and the number of teeth $N_2$ of the face cam 11. Let the difference in the number of teeth be D. Then, $D = N_1 - N_2$, wherein $N_1$ is a constant. Therefore, the rotational displacement of the face cam 11 is determined by the ratio $D/N_2$. This value can be derived in terms of angular displacement Now, let an angular displacement of the face cam 11 be A for one rotation of the input shaft 1:

$A = D \cdot 360°/N_2$ (9)

When the input shaft 1 rotates by $\theta°$

$$\Delta A = A \cdot \theta/360 = D \cdot 360 \cdot \theta/N_2 \cdot 360 = D \cdot \theta/N_2 \qquad (10)$$

Since D and $N_2$ are constants, it is understood that $\Delta A°$ varies in proportion to the angular displacement $\theta$ of the input shaft 1.

The values of $\Delta A°$, angles B° and C° represent the angular displacement of the face cam 11 engageable with the rollers 15. It is derived from this that the equations (7), (8) and (10) are formulae for generating the tooth profile.

The curves for generating the tooth profile in accordance with these equations become three-dimensional, not planar. With reference to Figs. 3 to 6 the development of the approximate tooth profile of the face cam 11 will be described:

In Fig. 6 it is presumed that the face cam 11 is stationary whereas the rollers 15 rotate though the face cam 11 actually wobbles while rotating.

In Fig. 3, it is presumed that the face cam 11 is provided with a cylindrical member 17 concentric with the slant shaft 2, the cylindrical member 17 having a radius of K. Suppose that the cylindrical member 17 moves over a distance $\Delta S$ when the face cam 11 rotates by $\Delta A°$.

$\Delta S/2\pi K = \Delta A/2\pi$

$\Delta S = \Delta A \cdot K$ (11)

Substituting the equation (10) for $\Delta A$ in the equation (11)

$\Delta S = D \cdot \theta \cdot K/N_2$ (12)

The angular displacement $\theta$ of the input shaft 1 is constant, which consists of one rotation divided by n. With the substitution of $\theta = 2 \cdot \pi/n$ the variations of tooth profile can be generated. Substituting this value for the equation (12)

$\Delta S = 2 \cdot \pi \cdot K \cdot D/n \cdot N_2$ (13)

whence $\Delta S$ is determined.

If the tooth profile is to be recognized by unrolling the cylindrical member 17, the decline of the face cam caused by an angular displacement of the axis C must be taken into consideration. Fig. 4 shows a state where the axis C is in the maximum angular displacement, and Fig. 5 is an enlarged view of the main portion of Fig. 4. Suppose that a displacement of the roller from the axis of the face cam is DX.

Then

$DX = H \cdot \sin C°$ (14)

If the matter is considered on the development view, the center of the roller is derived by substituting the equation (14) for the equation (13), that is:

$Xn = \Delta S - DX$ (15)

A displacement in the direction of Y axis is approximately expressed in terms of the angle B.

First, a distance y displaced in parallel with the axis A-A' in Fig. 3 is determined, on the basis of which the sketch is drawn.

In Fig. 3, suppose that (1) there is provided a straight line C-C' passing through the center O of the slant shaft 2 and intersecting with the axis A-A' at right angle, (2) that the line C-C' is spaced from the axis of the rollers 15 by a distance H, and (3) that the axial center Q of the cylindrical member 17 of the face cam 11 is displaced by h from the angle B

$y = K \cdot \sin \alpha$

$y = H - h$

$\Delta h = K \cdot \sin B$

Therefore,

$\Delta Y = H - \Delta h$ (16)

When the tooth profile is divided by n, Yn is expresed by:

$Yn = H - K \cdot \sin\{\tan^{-1} (\cos 2\pi/n) \cdot \tan\alpha\}$ (17)

From the equations (15) and (17) n = 20 and D = 1 are respectively obtained, on the basis of which Xn and Yn are calculated. The values of Xn are plotted along a horizontal axis, and as shown in Fig. 6, circles having a diameter equal to that of the roller 15 are drawn with the centers as the intersections of Xn and Yn. In this way a desired tooth profile is approximately obtained.

Example

Referring to Figs. 7 to 11, the manner of generating a tooth profile on the basis of angles ΔA°, B° and C° will be described by way of an example:

There is provided a B-axis NC rotary table 20 which rotates about a vertical axis B by an angle $\alpha$ in a clockwise and anti-clockwise direction, wherein the angle $\alpha$ is equal to the decline of angle of the slant shaft 2. There is also provided a C-axis NC rotary table 21 which rotates about a horizontal axis C by an angle $\alpha$ in a clockwise and anti-clockwise direction, wherein the angle $\alpha$ is equal to the decline of angle of the slant shaft 2. There is provided a third rotary table 22, that is, an A-axis NC rotary table 22 having a rotary shaft 23 which rotates about an axis A (horizontal) intersecting with the axis C at right angle. The shaft 23 includes a blank holder 24 whereby a blank 25 is maintained. The reference numeral 26 denotes a tail stock adapted to bear a free end of the rotary shaft 13.

The reference numeral 27 denotes an end mill 27, which has the same diameter as that of the roller 15, and is disposed at the same place as the roller 15 fixed in such a manner as to cut the sides of the blank 25. In Figs. 7 to 11, D is the central axis along which the NC operation is carried out, the central axis passing through the intersections of the axes A, B and C. The working is initiated from the intersections of these axes .

To initiate the operation, the B-axis NC rotary table 20 is rotated until it is angularly displaced by an angle $\alpha$ from the central axis D. At this stage the C-axis rotary table 21 takes a horizontal posture, under which the end mill 27 comes into engagement with the gear blank 25.

Next, the A-axis NC rotary table 22 is driven to enable the blank 25 to rotate intermittently $\Delta\alpha$ by $\Delta\alpha$. The B-axis NC rotary table 20 and the C-axis NC rotary table are rotated by the angles B and C, respectively. As shown in Fig. 9, when the B-axis NC rotary table 20 is displaced by $\alpha$ from the line D in the opposite direction, it is reversely rotated, and returned to the original position shown in Fig. 7 by way of the position shown in Figs. 10 and 11, in the course of which the gear blank 25 is cut by the end mill 27 to have a tooth profile 18 on its side. Subsequently the same procedure is repeated until $N_2$ teeth is formed

on the face cam 11. Then, the other side of the gear blank 25 is cut in the same manner until $N_3$ teeth are formed on the face cam 12. In this way a double-toothed gear 10 is finished as shown in Fig. 12. Fig. 13 shows an unrolled phase (development) of the tooth profile of the double-toothed gear 10.

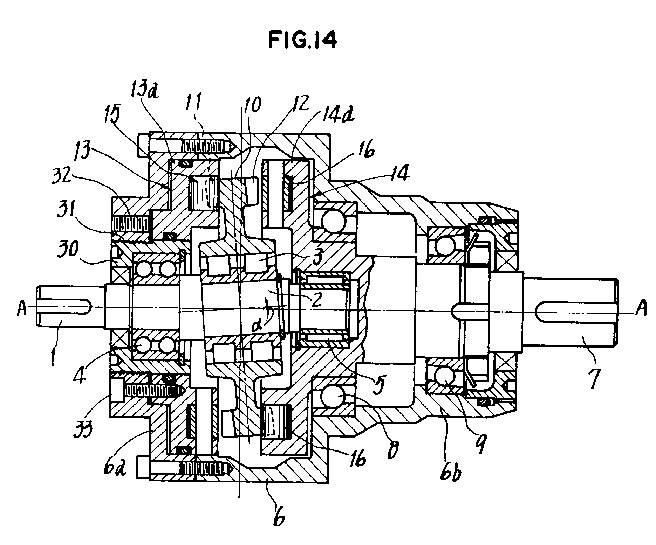

Fig. 14 shows a differential speed reduction apparatus using the double-toothed gear 10 produced in the above-mentioned manner, in which the principle illustrated in Fig. 1 underlies.

The input shaft 1 is provided with a slant shaft 2 in its middle portion which is inclined by an angle $\alpha$. The slant shaft 2 carries the double-toothed gear 10 through bearings 3. The input shaft 1 is carried on the casing 6 through bearings 4 and needle bearings 5 such that it rotates about the axis A-A′. The bearings 4 are accommodated in a housing 30, which is screwed to a casing cover 6a at threads 31 such that the bearings 4 are adjustable along the axis A-A′ together with the housing 30.

The output shaft 7 is concentric of the input shaft 1, and carried in a sleeve 6b through bearings 8 and 9.

The double-toothed gear 10 is interlocated between the stationary face gear 13 and the movable face gear 14, the latter being provided with $N_1$ pieces of rollers 15 and $N_4$ pieces of rollers 16, respectively, which are radially arranged on discs 13a and 14a with respect to the axis A-A′. The rollers 15 and 16 are engageable with the face cams 11 and 12 of the double-toothed gear 10.

The disc 13a is secured to the casing 6 by means of an adjustable screw 32 and a fixed screw 33 in such a manner as to be adjustable along the axis A-A′. The threads 31 of the housing 30, the adjustable screw 32 and the fixed screw 33 constitute a backlash compensating entity whereby the rollers 15 are properly in mesh with the face cam 11.

The disc 14a is rotatively mounted on the inner end of the output shaft 7.

The differential speed reduction ratio (i) of the apparatus is expressed by:

$i - 1 - N_1 \bullet N_3/N_2 \bullet N_4$

As is evident from the foregoing description, the differential speed reduction apparatus according to the present invention has the following advantages:

(1) A high reduction ratio is secured.

(2) A low inertia results; i.e. the input shaft has a relatively small moment of inertia.

(3) A possible backlash can be minimized by adjusting the face cams along the axis A-A′.

(4) An energy loss, if any, is minimized because of the arrangement that the input shaft and the output shaft are concentric.

(5) The speed reducing efficiency is enhanced because of the rolling contact.

(6) The face cams withstand a high load. One third of the teeth transmit a torque, which means that a large torque is transmitted.

(7) The face cams are compact in size and lightweight because of their relatively small diameter.

(8) The face cams can withstand a long period of use because they are safe from friction.

(9) The structure of the apparatus is simple and therefore easy to maintain.

(10) The rolling contact allows the cam faces to rotate at high speeds.

## Claims

**1.** A differential speed reduction apparatus, which comprises a double-toothed gear (10) including face cams (11, 12) at opposite sides, each face cam (11, 12) having a tooth profile generated so as to be suitable for use in the differential speed reduction apparatus, an input shaft (1) carrying the double-toothed gear, a slant shaft (2) rotatably connected to the input shaft (1) such that the slant shaft (2) wobbles in association with the rotation of the input shaft (1), a stationary face gear (13) engageable with the face cams (11, 12) of the double-toothed gear, and a moveable face gear (14) secured to an output shaft, wherein

(i)the stationary face gear (13) and the moveable face gear (14) have a roller-like or a convex-face contour;

(ii)the double-toothed gear (10) is rotatably carried on the slant shaft (2); and

(iii)the moveable face gear (14) is engageable with the face cam (12) of the double-toothed gear (10), characterised in that the face cams (11, 12) of the double-toothed gear each have a tooth profile which is defined by a locus curve (18) plotted by the roller-like contour or convex-face contour (15, 16) as its centre is moved along points ($X_n$, $Y_n$) in a system of coordinates, $X_n$ and $Y_n$ being given by the following formulae:

$$X_n = \Delta S - DX = (D.\ 2\pi/n\ .K/N) - H.\sin C$$
$$= D\ .2\pi/n\ .\ K/N - H\ \sin[\tan^{-1}(\sin 2\pi/n\ .\ \tan\alpha)]$$

$$Y_n = H - K\ .\sin[\tan^{-1}(\cos 2\pi/n\ .\ \tan\alpha)$$

where:
n is an integer;
As is the circumferential displacement of the relevant cam induced by an angular displacement $\Delta A°$;
DX is the linear displacement of the relevant roller-like contour from the axis of the face cam;
C° represents an angular displacement of the axis of the face cam;
$\alpha$ is the angle at which the slant shaft (2) is inclined to axis A-A' of the input shaft (1);
N is the number of teeth of the relevant cam (11, 12);
D is the difference between the number of roller-like or convex-face contours (15, 16) and the number of teeth of one of the face cams (11);
H is the distance between the centre of the roller-like contour of the respective face gear (13, 14) and a radial straight line C-C' passing through the centre of the double-toothed gear (10); and
K is the radial distance between the centre of the double-toothed gear (10) and the peripheral plane in which the profile is formed.

**2.** A system for generating a tooth profile suitable for use in a differential speed reduction apparatus according to Claim 1, the system comprising a B-axis NC rotary table (20) reversibly rotatable about an axis B by an angle $\alpha$, a C-axis NC rotary table (21) provided on the B-axis rotary table, the C-axis table (21) being reversibly rotatable about an axis C by an angle $\alpha$, the axis C intersecting with the axis B at a right angle, an A-axis NC rotary table (22) provided on the C-axis rotary table, the A-axis rotary table (22) being reversibly rotatable about an axis A intersecting the axis C at a right angle, the A-axis rotary table (22) including a rotary shaft (23), a gear blank holder (24) secured to the rotary shaft, an end mill (27) secured to the gear blank holder (24) to cut the sides of a gear blank (25) held by the gear blank holder (24), the end mill (27) having a diameter equal to that of the rollers (15) of the differential speed reduction apparatus or equal to twice the radius of curvature of the convex-face contour (16) (if present) thereof, the A-axis rotary table being driven to enable the gear blank (25) to rotate by a predetermined angle at which a slant shaft wobbles, and the B-axis rotary shaft and the C-axis rotary shaft respectively being driven to enable the blank (25) to reversibly rotate by angles $B^0$ and $C^0$, thereby generating a desired tooth profile, wherein

$B° = \tan^{-1}$ (Cos. $\theta$. tan $\alpha$);
$C° = \tan^{-1}$ (Sin. $\theta$. tan $\alpha$);

$\theta$ is the angular rotation of the slant shaft (2) of the speed reduction apparatus about the axis of the input shaft (1) thereof; and
$\alpha$ is the angle of inclination of the slant shaft (20) relative to the input shaft (1).

**3.** A double-toothed gear for use in differential speed reduction apparatus, the gear having tooth profiles at opposite sides which satisfy the formulae set forth in Claim 1.

**Patentansprüche**

**1.** Vorrichtung zur differenzierten Geschwindigkeitsreduzierung (Untersetzungsdifferential), welche ein zweifach verzahntes Zahnrad (10) aufweist, das stirnseitige Nocken (11, 12) auf gegenüberliegenden Seiten aufweist, wobei jeder stirnseitige Nocken (11, 12) ein Zahnprofil hat, das so erzeugt ist, daß es für die Verwendung in der Vorrichtung zur differentiellen Geschwindigkeitsreduzierung geeignet ist, mit einer Eingangswelle (1), welche das doppelt verzahnte Zahnrad aufweist, einer Neigungswelle (2), die mit der Eingangswelle (1 ) drehend verbunden ist, so daß die Neigungswelle (2) in einer Taumel- bzw. Wobbeibewegung bezüglich der Drehung der Eingangswelle (1) dreht, einem stationären, stirnseitig verzahnten Zahnrad (13), weiches mit den Stirnseitennocken (11, 12) des doppelt verzahnten Zahnrades in Eingriff bringbar ist, und einem bewegbaren, stirnseitig verzahnten Zahnrad (14), welches an einer Ausgangswelle befestigt ist, wobei

(i) das stationäre stirnseitig verzahnte Zahnrad (13) und das bewegbare stirnseitig verzahnte Zahnrad (14) eine walzenartige oder konvexflächige Kontur haben,

(ii) das doppelt verzahnte Zahnrad (10) drehbar auf der Neigungswelle (2) gelagert ist, und

(iii) das bewegbare stirnseitig verzahnte Zahnrad (14) mit den Stirnseitennocken (12) des doppelt verzahnten Zahnrades (10) in Eingriff bringbar ist, dadurch gekennzeichnet, daß die stirnseitigen Nocken bzw. Zähne (11, 12) des doppelt verzahnten Zahnrades jeweils ein Zahnprofil haben, das durch eine Ortskurve (18) definiert wird, welche von der walzenartigen Kontur oder konvexflächigen Kontur (15, 16) aufgezeichnet wird, wenn deren Zentrum entlang von Punkten ($X_n$, $Y_n$) in einem Koordinatensystem bewegt wird, wobei $X_n$ und $Y_n$ gegeben sind durch die folgenden Formeln:

$$Xn = \Delta S - DX = (D.\ 2\pi/n\ .K/N) - H.\sin C$$
$$= D\ .2\pi/n\ .\ K/N - H\ \sin[\tan^{-1}(\sin 2\pi/n\ .\ \tan\alpha)]$$

$$Y_n = H - K\ .\ \sin[\tan^{-1}(\cos 2\pi/n\ .\ \tan\alpha),$$

wobei n eine ganze Zahl ist,

ΔS die Verschiebung in Umfangsrichtung des relevanten Nockens bzw. Zahnes ist, die durch eine Winkelverschiebung ΔA° verursacht wird,

DX die lineare Verschiebung der relevanten walzenartigen Kontur von der Achse des stirnseitigen Zahnes bzw. Nockens ist,

C° eine Winkelverschiebung der Achse des stirnseitigen Nockens bzw. Zahnes wiedergibt,

$\alpha$ der Winkel ist, unter welchem die Neigungswelle (2) bezüglich der Achse A-A' der Eingangswelle (1) geneigt ist,

N die Anzahl der Zähne des relevanten Nockens (11, 12) ist,

D der Unterschied zwischen der Zahl der walzenartigen oder konvexflächigen Konturen (15, 16) und der Anzahl der Zähne einer der stirnseitigen Nocken (11) ist,

H der Abstand zwischen dem Zentrum der walzenartigen Kontur des jeweiligen stirnseitigen Zahnrades (13, 14) und einer radialen, geraden Linie C-C' ist, welche durch das Zentrum des doppelt verzahnten Zahnrades (10) verläuft, und

K der radiale Abstand zwischen dem Zentrum des doppelt verzahnten Zahnrades (10) und der Umfangsebene ist, in welcher das Profil ausgebildet ist,

**2.** System zum Erzeugen eines Zahnprofiles welches für die Verwendung in einer differentiellen Vorrichtung zur Geschwindigkeitsreduzierung (Untersetzungsdifferential) gemäß Anspruch 1 ist, wobei das System einen B-Achsen NC-drehbaren Tisch (20) aufweist, der umkehrbar um eine Achse B um einen Winkel a drehbar ist, einen C-Achsen NC-drehbaren Tisch (21) aufweist, der auf dem B-Achsen drehbaren Tisch vorgesehen ist, wobei der C-Achsen Tisch (21) umkehrbar drehbar ist um eine Achse C um einen Winkel $\alpha$ und die Achse C die Achse B unter einem rechten Winkel schneidet, einen A-Achsen NC-drehbaren Tisch (22) aufweist, der auf dem C-Achsen drehberen Tisch vorgesehen ist, wobei der A-Achsen drehbare Tisch (22) umkehrbar drehbar ist um eine Achse (A), welche die Achse C unter einem rechten Winkel schneidet, der A-Achsen drehbare Tisch (22) eine drehbare Welle (23) aufweist, einen Zahnradrohlinghalter (24), der an der drehbaren Welle befestigt ist, einen Stirnfräser (27), der an dem Zahnradrohlinghalter (24) befestigt ist, um die Seiten eines Zahnradrohlinges (25) zu überarbeiten, welcher von dem Zahnradrohlinghalter (24) gehalten wird, wobei der Stirnfräser (27) einen Durchmesser hat, der gleich dem der Walzen (15) der Vorrichtung zur differentiellen Geschwindigkeitsreduzierung oder gleich dem Zweifachen des Krümmungsradius der konvexflächigen Kontur (16) (falls vorhanden) desselben ist, wobei der A-Achsen drechbare Tisch so angetrieben wird, daß er ermöglicht, daß sich ein Zahnradrohling (25) um einen vorbestimmten Winkel dreht, unter welchem eine Neigungswelle taumelt bzw. wobbelt, und die B-Achsendrehwelle bzw. die C-Achsendrehwelle so angetrieben werden, daß sie ermöglichen, daß sich der Rohling (25) umkehrbar um Achsen B° und C° dreht und dadurch ein gewünschtes Zahnprofil erzeugen, wobei

$B^0 = \tan^{-1}(\mathrm{Cos}\ \theta\ .\ \tan\alpha);$
$C° = \tan^{-1}(\mathrm{Sin}\ \theta.\ \tan\alpha);$

dabei ist $\theta$ die Winkeldrehung der Neigungswelle (2) der Vorrichtung zu Geschwindigkeitsreduzierung um die Achse der zugehörigen Eingangswelle (1), und

$\alpha$ der Neigungswinkel der Neigungswelle (20) relativ zu der Eingangswelle (1).

**3.** Doppeltgezahntes Zahnrad für die Verwendung in einer Vorrichtung zur differentiellen Geschwindigkeitsreduzierung, wobei da Zahnrad Zahnprofile auf gegenüberliegenden Seiten hat, welche die Gleichungen gemäß Anspruch 1 erfüllen.

## Revendications

**1.** Dispositif de réduction de vitesse différentiel, qui comprend un engrenage à double denture (10) comprenant des cames plates (11, 12) de chaque côté, chaque came plate (11, 12) ayant un profil de denture engendré de manière à être approprié pour utilisation dans le dispositif de réduction de vitesse différentiel, un arbre d'entrée (1) portant l'engrenage à double denture, un arbre oblique (2) relié de manière mobile en rotation à l'arbre d'entrée (1) de telle façon que l'arbre oblique (2) oscille en association avec la rotation de l'arbre d'entrée (1), un engrenage plat fixe (13) pouvant venir en prise avec les cames plates (11, 12) de l'engrenage à double denture, et un engrenage plat mobile (14) fixé à un arbre de sortie, dans lequel :

(i) l'engrenage plat fixe (13) et l'engrenage plat mobile (14) ont un contour du type galet ou une face convexe ;

(ii) l'engrenage à double denture (10) est porté mobile en rotation sur l'arbre oblique (2) ; et,

(iii) l'engrenage plat mobile (14) peut être en prise avec la came plate (12) de l'engrenage à double denture (10) ;

caractérisé en ce que les cames plates (11, 12) de l'engrenage à double denture ont chacune un profil de denture qui est défini par une courbe lieu géométrique (18) tracée par le contour du type galet ou le contour à face convexe (15, 16) lorsque son centre se déplace le long de points ($X_n$, $Y_n$) dans un système de coordonnées, $X_n$ et $Y_n$ étant donnés par les formules suivantes :

$$X_n = \Delta S - DX = (D.\ 2\pi/n\ .K/N) - H.\sin C$$
$$= D\ .2\pi/n\ .\ K/N - H \sin[\tan^{-1} (\sin 2\pi/n)\ .\ \tan\alpha)]$$

$$Y_n = H - K\ .\sin[\tan^{-1} (\cos 2\pi/n\ .\ \tan\alpha)]$$

où :

n est un nombre entier ;

$\Delta S$ est le déplacement circonférentiel de la came correspondante, induit par un déplacement angulaire de $\Delta A°$ ;

DX est le déplacement rectiligne du contour du type galet correspondant par rapport à l'axe de la came plate ;

C° représente un déplacement angulaire de l'axe de la came plate ;

$\alpha$ est l'angle suivant lequel l'arbre oblique (2) est incliné par rapport à l'axe A-A' de l'arbre d'entrée (1) ;

N est le nombre de dents de la came correspondante (11, 12) ;

D est la différence entre le nombre de contours du type galet ou à faces convexes (15, 16) et le nombre de dents de l'une des cames plates (11) ;

H est la distance entre le centre du contour du type galet de l'engrenage plat (13, 14) respectif et une ligne rectiligne radiale C-C' passant par le centre de l'engrenage à double denture (10) ; et,

K est la distance radiale entre le centre de l'engrenage à double denture (10) et le plan périphérique dans lequel le profil est formé.

**2.** Système pour engendrer un profil de denture approprié pour utilisation dans un dispositif de réduction de vitesse différentiel selon la revendication 1, le système comprenant une table tournante à commande numérique d'axe B (20) mobile en rotation de façon réversible autour d'un axe (B) d'un angle $\alpha$, une table tournante à commande numérique d'axe C (21) disposée sur la table tournante d'axe B, la table d'axe C (21) étant mobile en rotation de façon réversible autour d'un axe C d'un angle $\alpha$, l'axe C coupant l'axe B suivant un angle droit, une table tournante à commande numérique d'axe A (22) disposée sur la table tournante d'axe C, la table tournante d'axe A (22) étant mobile en rotation de façon réversible autour d'un axe A coupant l'axe C à angle droit, la table tournante d'axe A (22) comprenant un arbre tournant (23), un support d' ébauche d' engrenage (24) porté par l'arbre tournant, une fraise en bout (27) fixée au support d'ébauche d'engrenage (24) pour usiner les côtés d'une ébauche d'engrenage (25) maintenue par le support d'ébauche d'engrenage (24), la fraise en bout (27) ayant un diamètre égal à celui des galets (15) du dispositif de réduction de vitesse différentielle ou égale à deux fois le rayon de courbure du contour à face convexe (16) de celui-ci (s'il existe), la table tournante d'axe A étant entrainée pour faire en sorte que l'ébauche d'engrenage (25) tourne d'un angle prédéterminé suivant lequel un arbre mobile oscille, et l'arbre tournant d'axe B et l'arbre tournant d'axe C étant respectivement entraînés pour faire en sorte que l'ébauche (25) soit entraînée en rotation de façon réversible d'angles B° et C°, en engendrant ainsi un profil de dent souhaité, dans lequel :

$B^\circ = \tan^{-1} (\mathrm{Cos}\ \theta.\ \tan \alpha)$;
$C^\circ = \tan^{-1} (\mathrm{Sin}\ \theta.\ \tan \alpha)$;

$\theta$ est la rotation angulaire de l'arbre oblique (2) du dispositif de réduction de vitesse autour de l'axe de son arbre d'entrée (1) ; et
$\alpha$ est l'angle d'inclinaison de l'arbre oblique (20) par rapport à l'arbre d'entrée (1).

**3.** Engrenage à double denture utilisé dans un dispositif de réduction de vitesse différentiel, l'engrenage ayant, de chaque côté, des profils de dents qui satisfont les formules présentées dans la revendication 1.

FIG. 1

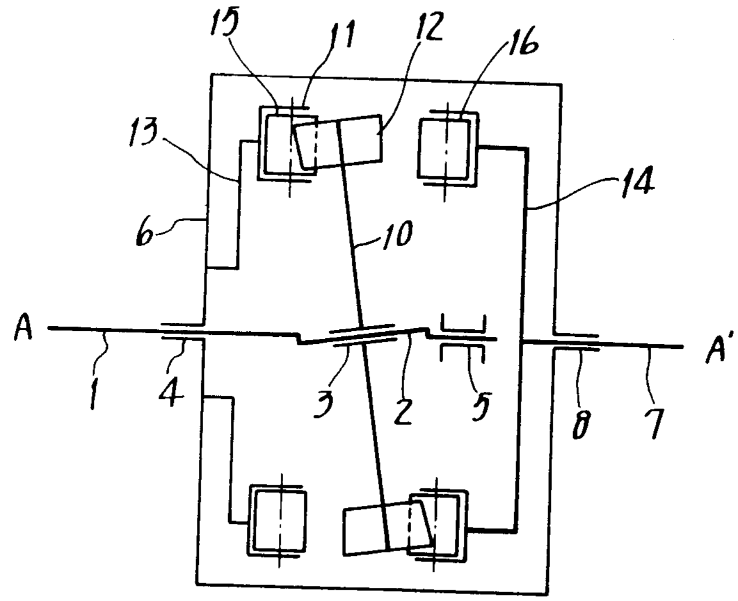


FIG.2

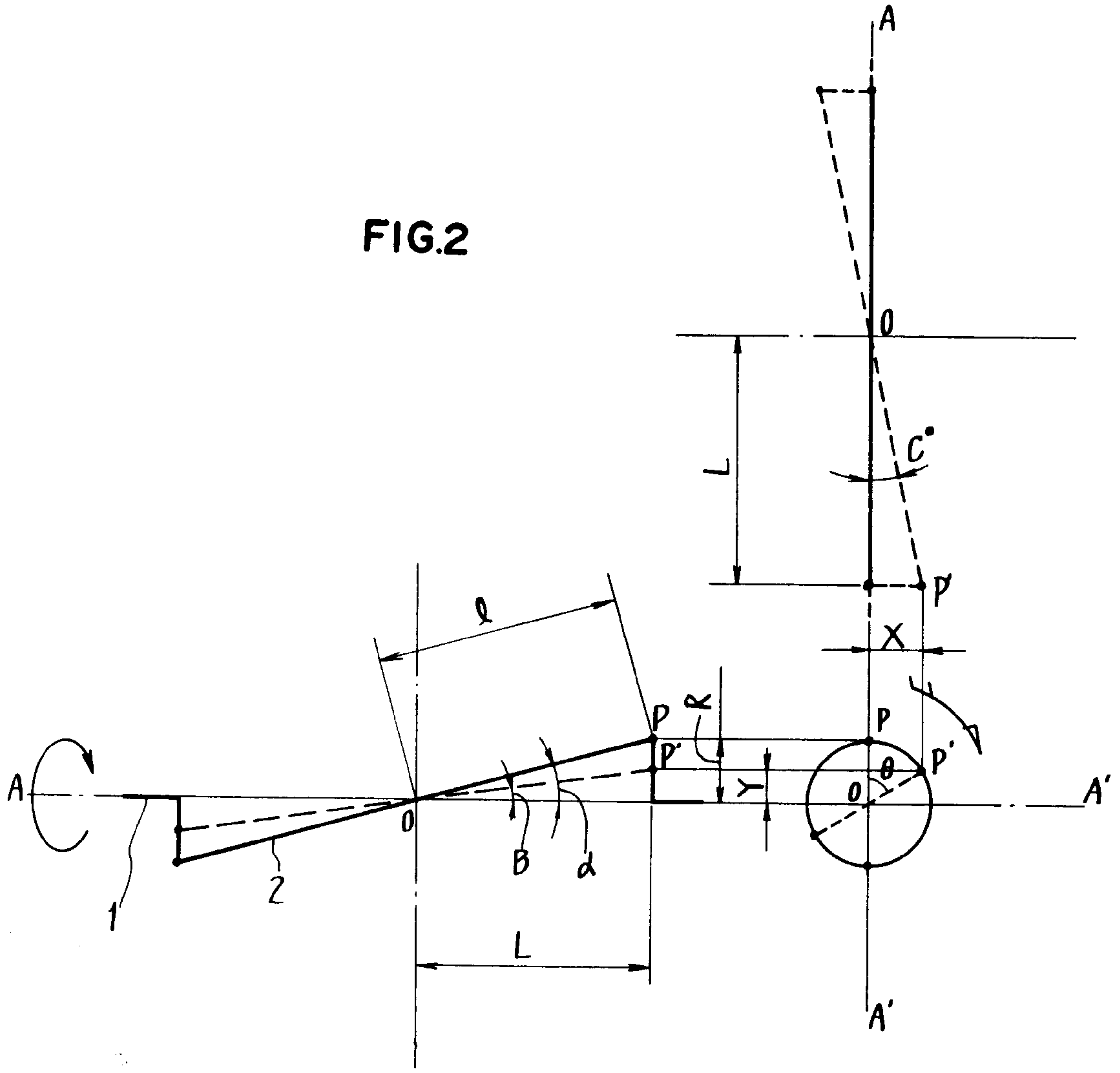

FIG.3b

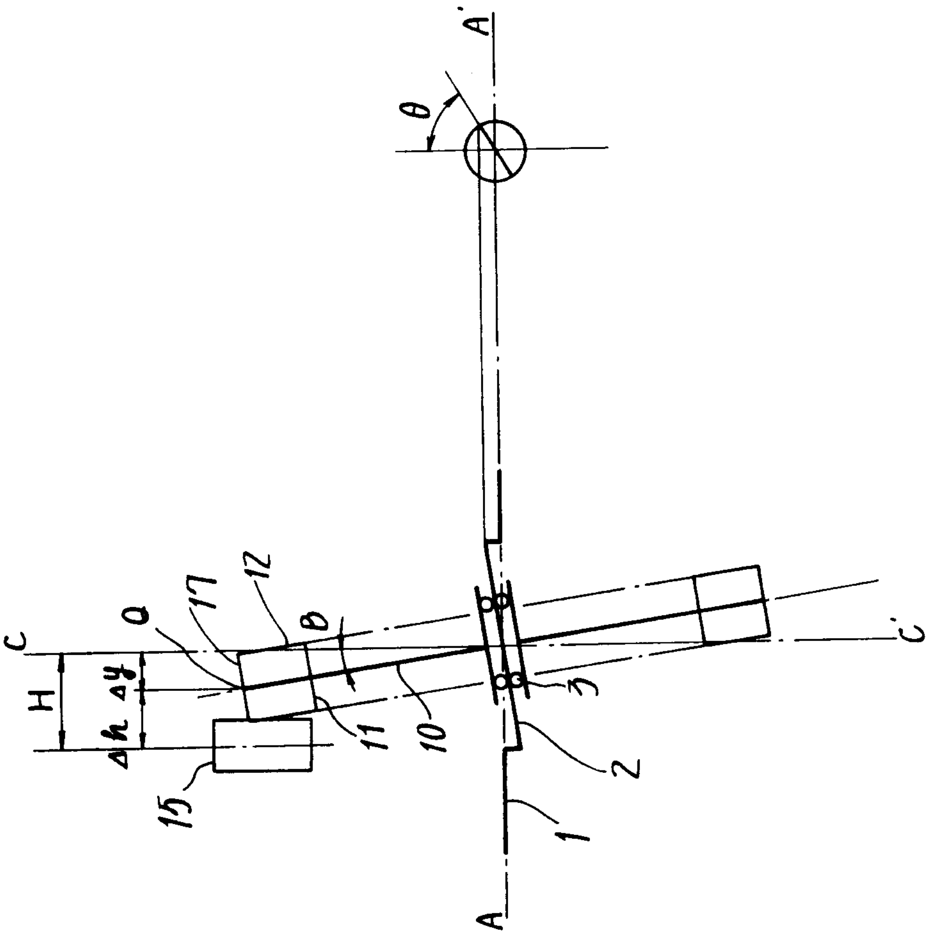


FIG.3a

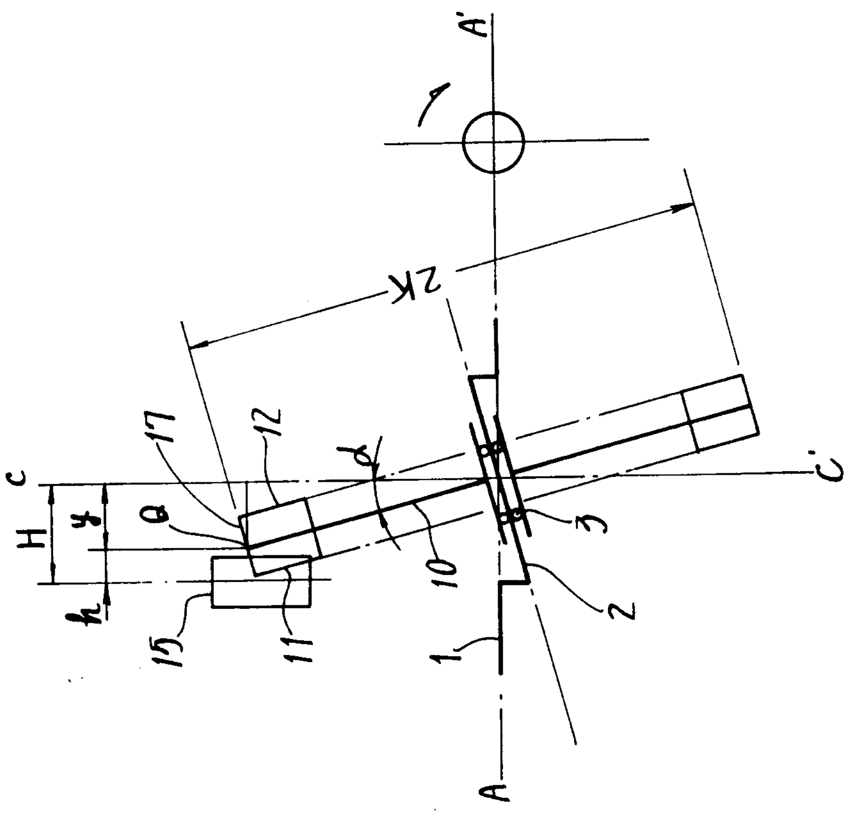

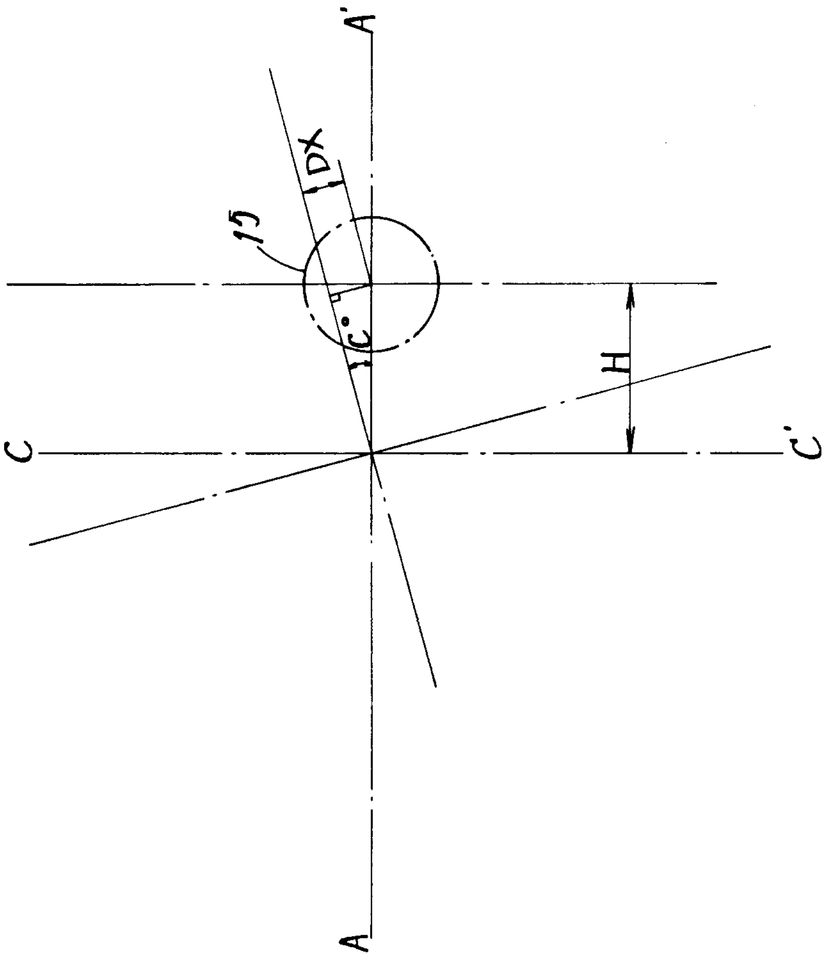


FIG.5

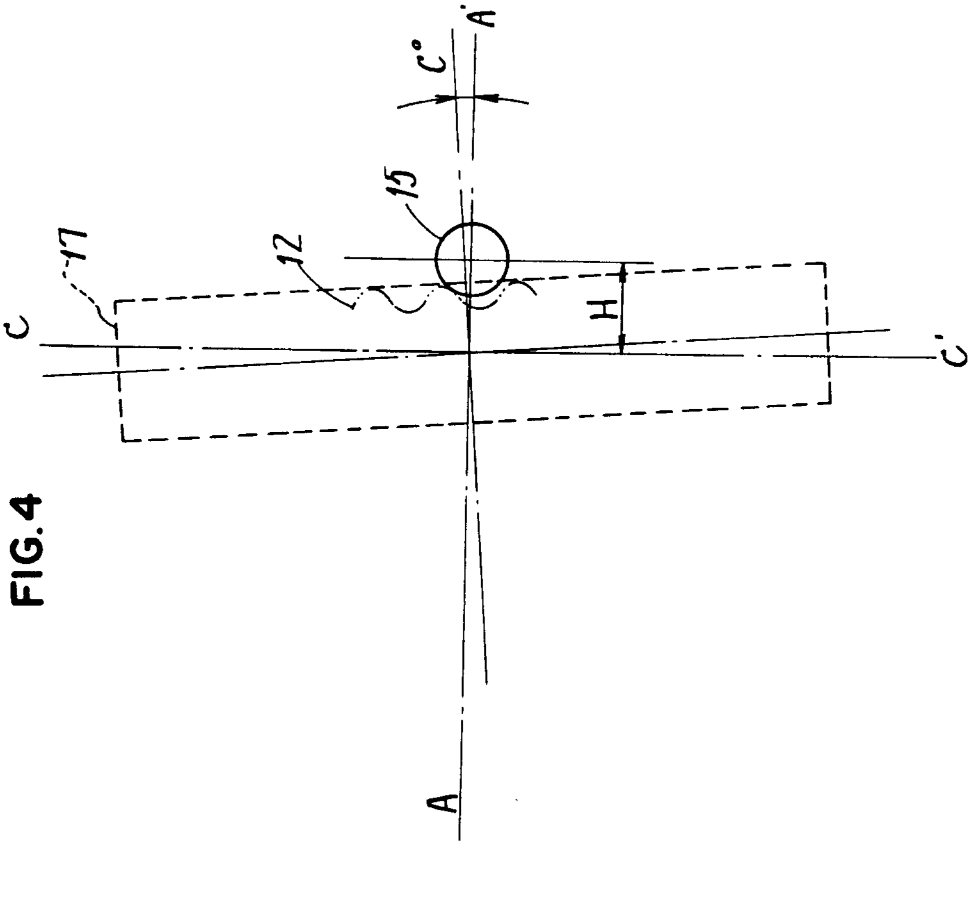


FIG.4

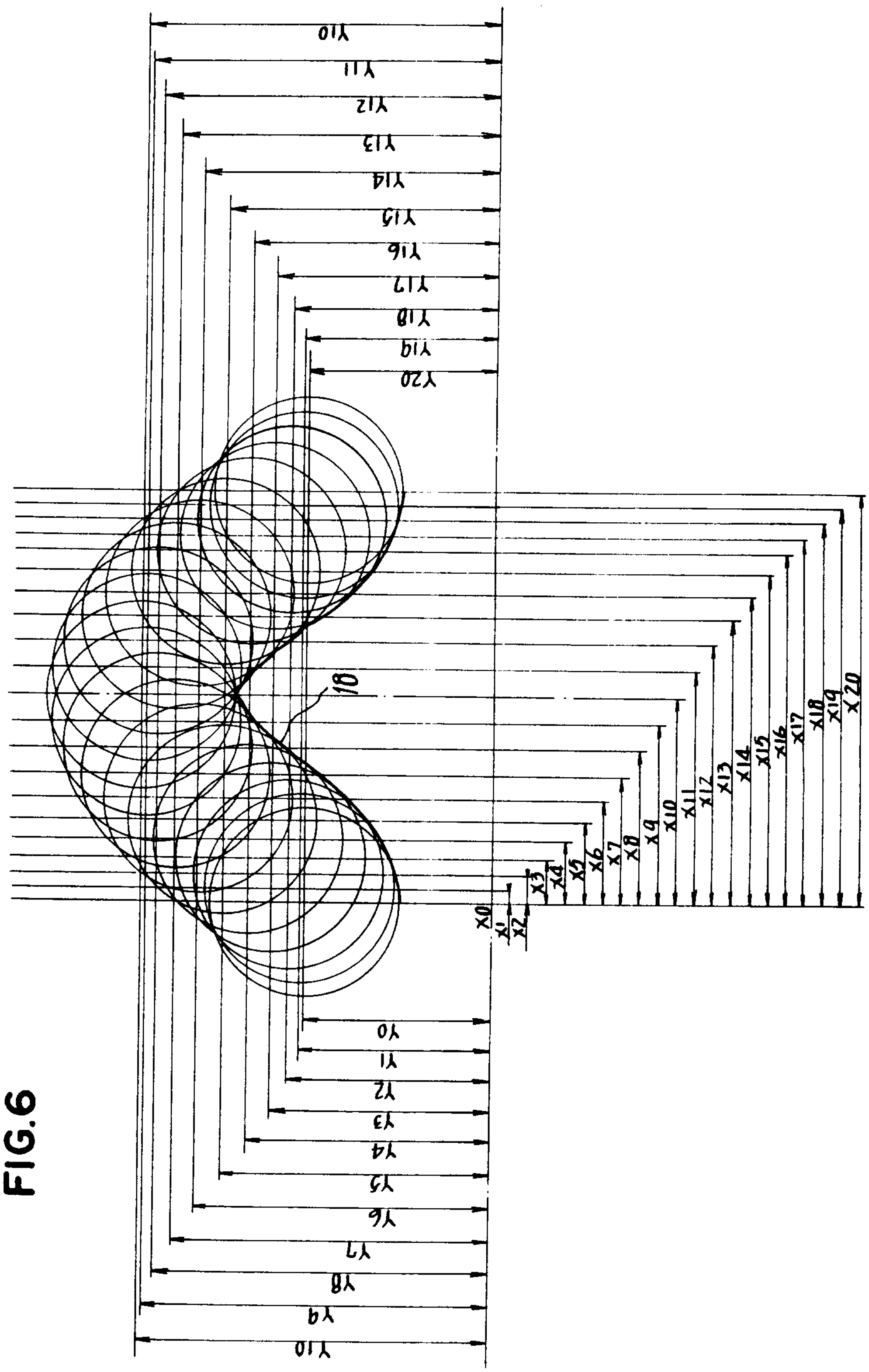
Y10
Y11
Y12
Y13
Y14
Y15
Y16
Y17
Y18
Y19
Y20
10
X0
X1
X2
X3
X4
X5
X6
X7
X8
X9
X10
X11
X12
X13
X14
X15
X16
X17
X18
X19
X20
Y0
Y1
Y2
Y3
Y4
Y5
Y6
Y7
Y8
Y9
Y10

FIG.6

FIG.7a
Axis B displaced (+) max
Axis B displaced 0°

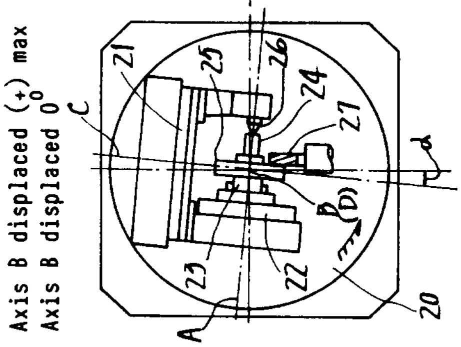


FIG.7b

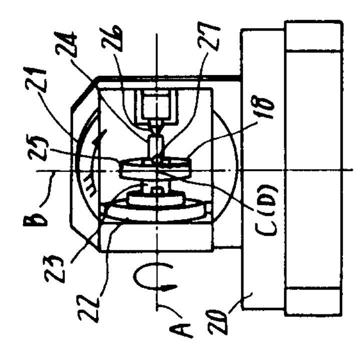


FIG.8a
Axis B displaced 0°
Axis C displaced (+) max

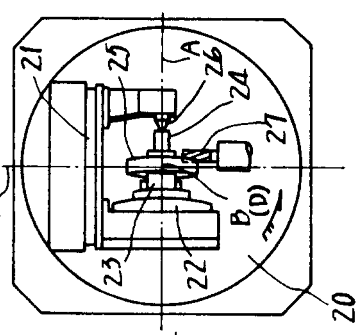


FIG.8b

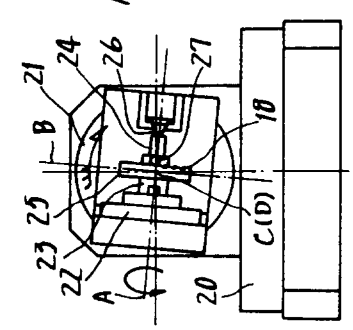


FIG.9a
Axis B displaced (-) max
Axis C displaced 0°

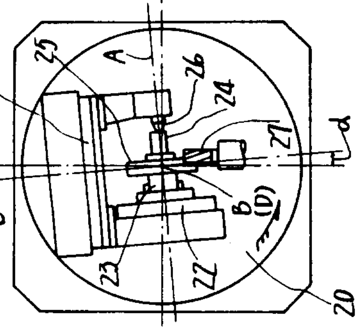


FIG.9b

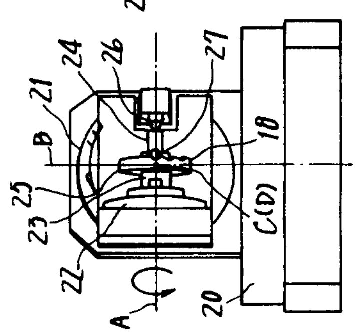


FIG.10a
Axis B displaced 0°
Axis C displaced (-) max

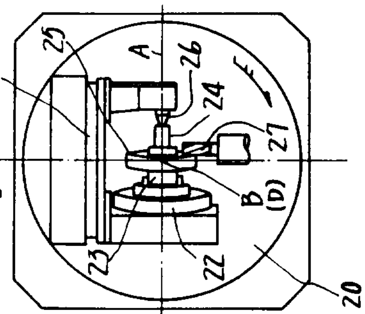


FIG.10b

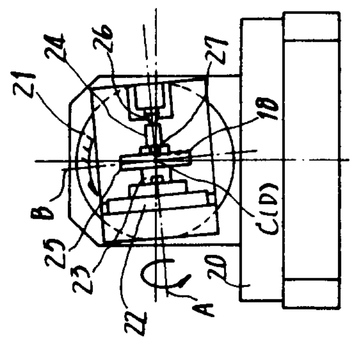


FIG.11a
Axis B displaced (+) max
Axis C displaced 0°

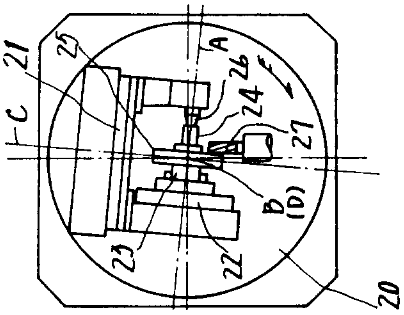


FIG.11b

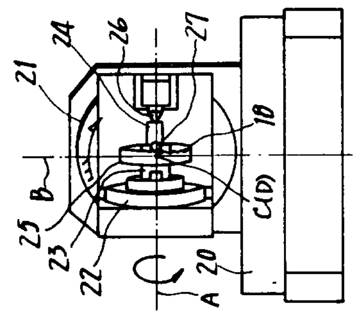

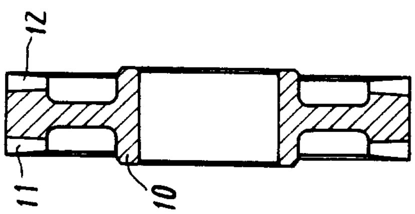

FIG.12

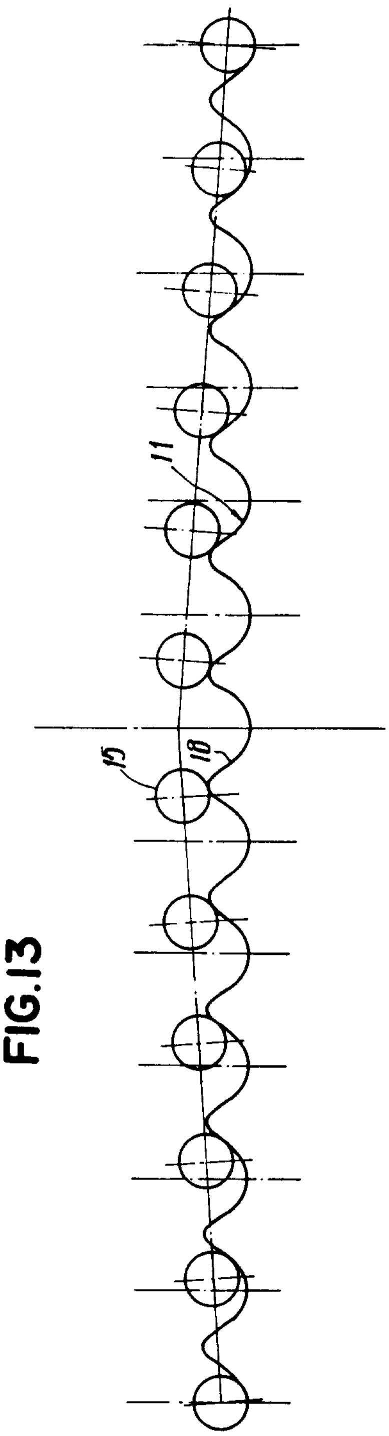

FIG.13

FIG.14